# EUROPÄISCHE PATENTANMELDUNG

(11) **EP 3 572 446 A1**
(43) Veröffentlichungstag der Anmeldung: **27.11.2019**
(21) Anmeldenummer: 18173957.4
(22) Anmeldetag: 24.05.2018
(51) Int. Cl.: C08G 18/79, C08J 5/24, C08G 18/80, C08G 18/18, C08G 18/20

(54) **REAKTIVE MISCHUNG VON URETDIONEN UND KATALYSATOREN**

(71) Anmelder: Evonik Degussa GmbH, 45128 Essen (DE)
(72) Erfinder: RAMON-GIMENEZ, Laura, 15134 Essen (DE); GOLLAN, Elke, 44653 Herne (DE); HENKE, Andrea, 48249 Dülmen (DE); FRESMANN, Nicole, 45721 Haltern am See (DE); SCHÜLLER, Jessika, 56767 Gunderath (DE)

(57) **Zusammenfassung**

Die Erfindung betrifft reaktive einkomponentige Mischungen von Uretdion-Gruppen enthaltenden Harzen und Katalysatoren, die, vorzugsweise ohne Anwesenheit von Hydroxyl-Gruppen enthaltenden Reaktionspartner, thermisch härtbar sind.

## Beschreibung

Die Erfindung betrifft reaktive einkomponentige Mischungen von Uretdion-Gruppen enthaltenden Harzen und Katalysatoren, die, vorzugsweise ohne Anwesenheit von Hydroxyl-Gruppen enthaltenden Reaktionspartner, thermisch härtbar sind.

Uretdion-Gruppen enthaltende Moleküle sind schon bekannt in der Polyurethanchemie als Vernetzer für Pulverlacke und in Polyurethandispersionen. In den letzten Jahren werden Uretdione auch im Bereich Composites (Prepregs) genutzt.

Die DE-OS 30 30 539 und DE-OS 30 30 572 beschreiben Verfahren zur Herstellung von Uretdion-Gruppen enthaltenden Polyadditionsverbindungen, deren terminale Isocyanat-Gruppen mit Monoalkoholen oder Monoaminen irreversibel verkappt sind. Nachteilig sind insbesondere die kettenabbrechenden Bestandteile der Vernetzer, die zu geringen Netzwerkdichten der PUR-Pulverbeschichtungen und damit zu mäßigen Lösemittelbeständigkeiten führen.

Hydroxyl-Gruppen terminierte und Uretdion-Gruppen enthaltende Polyadditionsverbindungen sind Gegenstand der EP 0 669 353. Sie weisen aufgrund ihrer Funktionalität von zwei eine verbesserte Resistenz gegenüber Lösemitteln auf. Den Pulverlacken auf Basis dieser Uretdion-Gruppen enthaltenden Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

In PCT/EP2013/067330 werden in Wasser dispergierbare hydrophile Uretdion-Gruppen enthaltende Polyisocyanate und Polyisocyanatgemische beschrieben und deren Umsetzung mit einem in Wasser löslichen oder emulgierbaren oder dispergierbaren Hydroxyl-Gruppen enthaltenden Reaktionspartner in Gegenwart von Hilfs- und/oder Zuschlagstoffen und optional einem Katalysator. Bei dieser Zusammensetzung handelt es sich um ein 1K-System, welches bei erhöhter Temperatur (30 min bei 130 °C bzw. 180 °C) ausgehärtet werden muss.

In JP 2006-321839A wird ein wässriges 1K-System bestehend aus einem hydrophilen Uretdion-Gruppen enthaltenden, blockierten Polyisocyanat und einem hydrophilen Polyol beschrieben, welches ebenfalls bei erhöhten Temperaturen (10 min bei 205 °C) ausgehärtet werden muss.

In der WO 97/18257 werden wässrige Polyurethandispersionen beschrieben, wobei die Polyurethane Uretdion-Gruppen aufweisen. Durch Reaktion mit geeigneten reaktiven Polyamin-Verbindungen wie z. B. primären oder sekundären Diaminen, Hydrazinen oder Polyhydraziden kann eine Vernetzungsreaktion erfolgen.

Polyurethan-Prepregs aus Uretdion-Gruppen enthaltenden Vernetzern und Polyolen werden in den folgenden Patenten beschrieben: DE10 2009 001 806A1, DE10 2010 029 355A1,

DE 10 2011 006 163. Die Polyurethanzusammensetzung wird als flüssiges Matrixmaterial benutzt um Fasern zu imprägnieren und daraus Formkörper herzustellen.

Der Einsatz von Amidinen als Katalysatoren in zwei-Komponenten (2K) PUR-Lacken wurde in der EP 0 803 524 beschrieben. Eine chemische Umsetzung des PUR-Härters in Gegenwart eines Katalysators in einer 2K-Zusammensetzung mit Hydroxy-Gruppen enthaltenden Harzen wurde in US 6 258 915 B1 veröffentlicht. Die genannten Lackformulierungen dieser Patente beinhalten allerdings ein stöchiometrisches molares Verhältnis von NCO zu OH von (1 : 1), während in der vorliegende Erfindung das Verhältnis mindestens NCO:OH größer als 1,4 : 1 ist.

Bayer beschreibt auch in US 2011/0229645 A1 eine niedrige Temperaturhärtung von Uretdion-Gruppen (nachfolgend UD abgekürzt) in Anwesenheit von Amidinen und Alkoholen, die aber zu Allophanat Verbindungen führen.

Es ist bekannt, dass sich der Uretdionring bei 200 °C in freie Isocyanat-Gruppen (NCO-Gruppen) spaltet.

Aufgabe der vorliegenden Erfindung war es, eine thermisch härtbare, reaktive Mischung basierend auf Uretdion-Gruppen enthaltenden Zusammensetzungen bereitzustellen, die bei niedriger Temperatur ausgehärtet werden können.

Überraschend wurde gefunden, dass thermisch härtbare und reaktive Mischungen basierend auf Uretdion-Gruppen enthaltenden Mischungen und spezifischen Katalysatoren bereitgestellt werden können, wobei zugleich vorzugsweise auf die Gegenwart von gegenüber Isocyanaten-Gruppen umfassend freie und latente Isocyanat-Gruppen in Uretdion-Gruppen, wie Hydroxyl-Gruppen, verzichtet werden kann.

Gelöst wurde die Aufgabe durch eine reaktive Mischung, die im Wesentlichen, insbesondere ausschließlich, Uretdion-Gruppen enthaltende Verbindungen und Amidine sowie optional Formulierungshilfstoffe ohne gegenüber Isocyanat-Gruppen reaktive Gruppen umfasst, nach Anspruch 1 sowie ein Verfahren zur Herstellung thermisch gehärteter Mischungen und vorzugsweise Beschichtungen nach Anspruch 9, als auch die Verwendung nach Anspruch 13. Die Erfindung wird detailliert in den Unteransprüchen sowie in der Beschreibung offenbart.

Gegenstand der Erfindung ist eine reaktive, thermisch vernetzbare Mischung, die im Wesentlichen die Komponenten i) und ii) enthält, die ausgewählt sind aus:
i) mindestens einer Verbindung, die mindestens eine Uretdion-Gruppe aufweist oder einer Mischung dieser, und
ii) mindestens eine Verbindung mit mindestens einer mit der Verbindung über Kohlenstoffatome verknüpften N-C=N-Gruppe. Wobei insbesondere die Verbindung mit mindestens einer N-C=N-Gruppe mit 0,001 bis 5 Gew.-% in der reaktiven Mischung zugegen ist, bevorzugt zu 0,001 bis 3 Gew.-% in der reaktiven Mischung. Die reaktive Mischung entspricht der Gesamtzusammensetzung der reaktiven Mischung mit 100 Gew.-%. Vorzugsweise unter der Maßgabe, dass Hydroxyl-Gruppen, insbesondere aus Hydroxyl-Gruppen enthaltenden Kohlenwasserstoffverbindungen, in der reaktiven Mischung unterstöchiometrisch anwesend sein können, insbesondere mit einem molaren Verhältnis von NCO zu OH von größer als 1,4 zu 1, insbesondere größer gleich 1,65 zu 1, bevorzugt von größer gleich 1,7 zu 1, besonders bevorzugt von größer gleich 1,8 zu 1.

Erfindungsgemäß ist das molare Verhältnis der Summe an freien Isocyanat-Gruppen und latenten Isocyanat-Gruppen der Uretdion-Gruppen aufweisenden Verbindung und der Verbindung mit mindestens einer N-C=N-Gruppe in der reaktiven Mischung größer gleich 10 : 1, vorzugsweise größer gleich 15 : 1.

Bisher war die selektive Öffnung des "latenten Isocyanates", d.h. in den Uretdion-Gruppen aufweisenden Verbindungen zum freien Isocyanat durch Katalyse bei einer Temperatur niedriger als 180°C, insbesondere ohne Anwesenheit von Hydroxyl-Gruppen enthaltenden Verbindungen, nicht bewiesen:

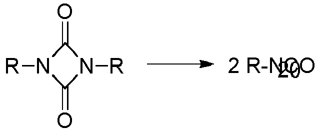

In jeder Uretdion-Gruppe sind somit zwei latente Isocyanate gebunden.

Gegenstand der Erfindung sind reaktive einkomponentige, thermisch vernetzbare Mischungen, insbesondere zur Herstellung einer thermisch vernetzten Mischung, bevorzugt zur Herstellung einer thermisch vernetzten Beschichtung durch Umsetzung der reaktiven Mischung, umfassend mindestens eine Uretdion-Gruppe aufweisende Verbindung, wobei die Mischung umfasst:
i) mindestens eine Verbindung, die mindestens eine Uretdion-Gruppe aufweist oder Mischungen dieser, und
ii) mindestens eine Verbindung mit mindestens einer mit der Verbindung über Kohlenstoffatome verknüpften N-C=N-Gruppe,
iii) optional mindestens einen Formulierungshilfstoff ohne gegenüber Isocyanat-Gruppen reaktive Gruppen, und
iv) optional mindestens ein aprotisches Lösemittel oder eine Mischung aprotischer Lösemittel, insbesondere mindestens ein polares aprotisches Lösemittel oder eine Mischung davon und
v) 0 bis 0,6 Mol an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung (100 Gew.-%).

Vorzugsweise besteht die reaktive Mischung aus den vorgenannten Verbindungen.

In einer bevorzugten Ausführungsform umfasst die reaktive Mischung 0,0 bis 0,64 Mol, insbesondere 0 bis 0,55 Mol, vorzugsweise 0,001 bis 0,5 Mol, bevorzugt 0,05 bis 0,4 Mol, an Hydroxyl-Gruppen in Hydroxyl-Gruppen enthaltenden Kohlenwasserstoffverbindungen je 1 Mol Isocyanat-Gruppen umfassend freie Isocyanat-Gruppen und latente Isocyanat-Gruppen in Uretdion-Gruppen in der gesamten reaktiven Mischung.

Beispiele für aprotische Lösemittel, insbesondere polare aprotische Lösemittel sind: Ether, Ester, Säureanhydride, Ketone, z. B. Aceton, tertiäre Amine, Pyridin, Furan, Thiophen, 1,1,1-Trichlorethan, und weitere asymmetrisch halogenierte Kohlenwasserstoffe (FCKW, Halothan), Anisol, Nitromethan, Dimethylformamid, Dimethylsulfoxid, HMPTA, Dimethylcarbonat, Tetramethylharnstoff, Tetraethylharnstoff, DMPU und/oder DMEU.

Vorzugsweise werden die aprotischen Lösemittel wasserfrei eingesetzt, wobei der Gehalt an Wasser in wasserfreien Lösemitteln vorzugsweise von 0,01 bis 5 Gew.-%, vorzugsweise von 0,01 bis 2,5 Gew.-% im Lösemittel beträgt.

Bevorzugt sind Verbindungen i), die mindestens eine Uretdion-Gruppe aufweisen, insbesondere Polyadditionsverbindungen mit mindestens einer Uretdion-Gruppe, und einem freien NCO-Gehalt von weniger als 2 Gew.-% und einem Gehalt an Uretdion-Gruppen von 3 bis 17 Gew.-%.

Als mindestens eine Verbindung ii) mit mindestens einer N-C=N-Gruppe werden vorliegend Verbindungen verstanden, die eine nicht nucleophile Base sind, die vorzugsweise mindestens ein weiteres Stickstoffatom umfassen.

Die mindestens eine Verbindung mit mindestens einer, mit der Verbindung über Kohlenstoffatome verknüpften N-C=N-Gruppe, nachfolgend als Verbindung mit mindestens einer N-C=N-Gruppe genannt, umfasst mindestens ein weiteres Stickstoffatom, wobei vorzugsweise alle Stickstoffatome der Verbindung Alkyl- und/oder Cycloalkyl-substituiert sind. Als Alkyl- und/oder Cycloalkyl-Subsituenten werden vorzugsweise Kohlenwasserstoffverbindungen mit 1 bis 25 C-Atomen verstanden. Erfindungsgemäß sind alle Verbindungen als Verbindung mit mindestens einer C=N-Gruppe geeignet, die mindestens eine N-C=N-Bindung aufweisen. Beispiele dafür sind Amidine, Guanidine, Dicyandiamid, oder Imidazole. Bevorzugt sind Verbindungen ohne reaktive Hydroxyl-Gruppen oder NH-Gruppen.

Ferner ist Gegenstand der Erfindung eine reaktive Mischung umfassend ii) mindestens eine Verbindung mit mindestens einer N-C=N-Gruppe, die vorzugsweise ausgewählt ist aus Amidinen, wie 1-Metyhylimidazol, N,N-Dimethyl-N'-phenylformamidinin, 1,4,5,6-Tetrahydro-1,2-dimethylpyrimidin, 2-Methyltetrahydropyrimidin, 1-Aceto-2-phenylimidazolin und 1-Aceto-2,4-dimethylimidazolin, 1,1,3,3-Tetramethylguanidin, Dicyandiamid, 1,5,7-Triazabicyclo[4.4.0]dec-5-en, 7-Methyl-1,5,7-triazabicyclo[4.4.0]dec-5-ene, N,N,N'-trisubstituierte Amidine und N,N,N'-trisubstituierten Diazabicycloalken-Verbindungen. Sowie den entsprechenden C1 bis C8 Alkyl-substituierten Verbindungen, der vorstehend genannten Verbindungen. Bevorzugt sind N,N,N'-trisubstituierte Amidine. Besonders bevorzugt sind Verbindungen mit mindestens einer N-C=N-Gruppe, die Teil einer N,N,N'-trisubstituierten Diazabicycloalken-Verbindung ist, vorzugsweise einer, mindestens eine N,N,N'-trisubstituierte Amindin-Struktur enthaltenden Verbindung. Bevorzugt werden Amidine oder Guanidine als Verbindung mit mindestens einer N-C=N-Gruppe eingesetzt. Besonders bevorzugte Verbindungen ii) sind ausgewählt aus 1,5-Diazabicyclo[4.3.0]-non-5-en (DBN) und 1,8-Diazabicyclo[5.4.0]undec-7-en (DBU). Die Herstellung solcher bicyclischen Amidine wird beispielsweise in EP 662 476 beschrieben. Erfindungsgemäß sind auch Guanidine, wie 1,1,3,3-Tetramethylguanidin, Dicyandiamid, insbesondere cyclische Guanidine, wie 1,5,7-Triazabicyclo[4.4.0]dec-5-en und 7-Methyl-1,5,7-triazabicyclo[4.4.0]dec-5-ene.

Gleichfalls ist es bevorzugt, wenn eine reaktive Mischung, insbesondere eine vernetzbare flächige Beschichtung der reaktiven Mischung, besteht aus:
i) mindestens einer Verbindung, die mindestens eine Uretdion-Gruppe oder Mischungen dieser aufweist, und
ii) mindestens eine Verbindung mit mindestens einer mit der Verbindung über Kohlenstoffatome verknüpften N-C=N-Gruppe,
iii) optional mindestens einem Formulierungshilfstoff ohne gegenüber Isocyanat-Gruppen reaktive Gruppen, und
iv) optional mindestens einem aprotischen Lösemittel oder einer Mischung aprotischer Lösemittel, insbesondere mindestens ein polares aprotisches Lösemittel oder eine Mischung davon und optional
v) 0 bis 0,6 Mol an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung (100 Gew.-%).

Ferner ist ein Gegenstand der Erfindung eine reaktive Mischung, deren Komponenten ausgewählt sind aus den Komponenten i) und ii), insbesondere aus i), ii) und iv), und optional zusätzlich ausgewählt aus iii), iv) und v), mit
i) 40 bis 99,999 Gew.-% mindestens einer Verbindung oder Mischungen dieser, die mindestens auf einer terminal substituierten Isocyanat-Gruppe basiert und mindestens eine Uretdion-Gruppe aufweist und auf einer Polyadditionsverbindung von mindestens einem aliphatischen und/oder mindestens einem cycloaliphatischen Diisocyanat basiert, und/oder mindestens einer Verbindung, die mindestens eine freie Isocyanat-Gruppe aufweist, die jeweils unabhängig auf aliphatischen oder cycloaliphatischen Diisocyanaten oder auf Polyadditionsverbindungen von aliphatischen oder cycloaliphatischen Diisocyanaten basieren, und
ii) 0,001 bis 5 Gew.-% mindestens einer Verbindung mit mindestens einer mit der Verbindung über Kohlenstoffatome verknüpften N-C=N-Gruppe,
iii) 0 bis 10 Gew.-% mindestens eines Formulierungshilfstoffes ohne gegenüber Isocyanat-Gruppen reaktive Gruppen, und
iv) 0 bis 59,999 Gew.-% mindestens eines aprotischen Lösemittels oder einer Mischung aprotischer Lösemittel,
v) 0 bis 0,6 Mol an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung (100 Gew.-%),
wobei der Gehalt der Komponenten i) und ii) und optional zusätzlich iii), iv) und v) in der Gesamtzusammensetzung der reaktiven Mischung 100 Gew.-% ergibt.

In alternativen reaktiven Mischungen kann die Mischung ausgewählt sein aus den Komponenten i), ii) und iv) und optional zusätzlich ausgewählt sein aus iii), mit
i) 40 bis 99,999 Gew.-% mindestens einer Verbindung oder Mischungen dieser, die auf mindestens einer terminal substituierten Isocyanat-Gruppe basiert und mindestens eine Uretdion-Gruppe aufweist und auf einer Polyadditionsverbindung von mindestens einem aliphatischen und/oder mindestens einem cycloaliphatischen Diisocyanat basiert, und/oder mindestens einer Verbindung, die mindestens eine freie Isocyanat-Gruppe aufweist, die jeweils unabhängig auf aliphatischen oder cycloaliphatischen Diisocyanaten oder auf Polyadditionsverbindungen von aliphatischen oder cycloaliphatischen Diisocyanaten basiert, und
ii) 0,001 bis 5 Gew.-% mindestens einer Verbindung mit mindestens einer mit der Verbindung über Kohlenstoffatome verknüpften N-C=N-Gruppe,
iii) 0 bis 10 Gew.-% mindestens eines Formulierungshilfstoffes ohne gegenüber Isocyanat-Gruppen reaktive Gruppen, und
iv) 0 bis 59,999 Gew.-% mindestens eines aprotischen Lösemittels oder eine Mischung aprotischer Lösemittel,
wobei der Gehalt der Komponenten i), ii) und iv) und optional iii) in der Gesamtzusammensetzung der reaktiven Mischung 100 Gew.-% ergibt.

Bevorzugte Uretdion-Gruppen aufweisende Verbindungen können ausgewählt sein aus:
- Uretdion-Gruppen enthaltenden Polyisocyanaten, insbesondere basieren die Uretdion-Gruppen enthaltenden Polyisocyanate auf Isophorondiisocyanat (IPDI), 4,4'-Methylendicyclohexyldiisocyanat (H12MDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxylylendiisocyanat (TMXDI) oder Mischungen basierend auf mindestens zwei der genannten Verbindungen, oder
- mit mindestens einer terminal substituierten Isocyanat-Gruppe, aus der Reaktion der Isocyanat-Gruppe mit einer Hydroxyl-Gruppe, NH-Gruppe oder HS-Gruppe aufweisenden monomeren oder polymeren Verbindung, und Uretdion-Gruppen enthaltenden Polyisocyanaten, insbesondere basieren die Uretdion-Gruppen enthaltenden Polyisocyanate auf Isophorondiisocyanat (IPDI), 4,4'-Methylenedicyclohexyldiisocyanate (H12MDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxylylendiisocyanat (TMXDI) oder Mischungen basierend auf mindestens zwei der genannten Verbindungen, wobei insbesondere die mindestens eine monomere oder polymere Verbindung mit mindestens einer Hydroxyl-Gruppe, NH-Gruppe oder HS-Gruppe umfasst Polyester, Polythioether, Polyether, Polycaprolactame, Polyepoxide, Polyesteramide, Polyurethane oder niedermolekulare Di-, Tri- und/oder Tetraalkohole und gegebenenfalls Monoamine und/oder Monoalkohole.

Besonders bevorzugt sind mit mindestens einer terminal Alkyl-substituierten Isocyanat-Gruppe, aus der Reaktion einer Isocyanat-Gruppe mit einem Alkohol, und Uretdion-Gruppen enthaltenden Polyisocyanaten, wobei die Alkyl-Gruppe 1 bis 12 C-Atome umfasst, vorzugsweise 2 bis 10 C-Atome, insbesondere basieren die Uretdion-Gruppen enthaltenden Polyisocyanate auf Isophorondiisocyanat (IPDI), 4,4'-Methylendicyclohexyldiisocyanat (H12MDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxylylendiisocyanat (TMXDI) oder Mischungen basierend auf mindestens zwei der genannten Verbindungen, und insbesondere der Umsetzung der freien Isocyanat-Gruppen mit einem Alkohol. Bevorzugte Alkohole umfassend Hydroxyl-Gruppen aufweisende Verbindungen wie Monoalkohole, insbesondere mit C1 bis C12-Alkylgruppe, bevorzugt als Kettenabbrecher.

Die terminal substituierten Uretdion-Gruppen enthaltenden Polyisocyanate sind vorzugsweise terminal mit Alkyl-Gruppen substituiert, insbesondere als Alkyl-funktionalisierte Urethan-Gruppen, und umfassen Uretdion-Gruppen, wobei die Alkyl-Gruppe 1 bis 12 C-Atome umfasst, vorzugsweise 2 bis 10 C-Atome.

Ebenso Gegenstand der Erfindung ist ein Verfahren zur Herstellung einer thermisch vernetzten Mischung sowie eine vernetzte Mischung erhältlich nach dem Verfahren, vorzugsweise eine thermisch vernetzte Beschichtung oder Flächenelement erhältlich nach dem Verfahren, indem
1) eine reaktive einkomponentige Mischung, umfassend
   i) mindestens eine Verbindung, die mindestens eine Uretdion-Gruppe aufweist oder Mischungen dieser, und
   ii) mindestens eine Verbindung mit mindestens einer mit der Verbindung über Kohlenstoffatome verknüpften N-C=N-Gruppe, die vorzugsweise ausgewählt ist aus 1,5-Diazabicyclo[4.3.0]- non-5-en (DBN) und 1,8-Diazabicyclo[5.4.0]undec-7-en (DBU),
   iii) 0 bis 0,6 Mol an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung (100 Gew.-%),
   iv) optional mindestens einen Formulierungshilfstoff ohne gegenüber Isocyanat-Gruppen reaktive Gruppen, und
   v) optional mindestens ein aprotisches Lösemittel oder eine Mischung aprotischer Lösemittel, insbesondere mindestens ein polares aprotisches Lösemittel oder eine Mischung davon, und optional aus der reaktiven Mischung eine Beschichtung oder ein Flächenelement aus der reaktiven Mischung gebildet wird,
2) bei einer Temperatur von 60 bis 180 °C vernetzt wird, insbesondere bei 60 bis 150 °C, vorzugsweise bei 90 bis 130 °C, und
3) eine thermisch vernetzte Mischung erhalten wird, insbesondere eine thermisch vernetzte Beschichtung oder Flächenelement. Die thermisch vernetzte Mischung umfasst Urethan-Gruppen und optional Isocyanurat-Gruppen und/oder Harnstoff-Gruppen.

Ferner ist Gegensand der Erfindung ein Verfahren zur Herstellung einer thermisch vernetzten Beschichtung - sowie eine Beschichtung erhältlich nach dem Verfahren -, indem
1) eine reaktive Mischung auf die Oberfläche eines Substrates aufgebracht wird, und
2) die reaktive Mischung auf der Oberfläche des Substrates bei einer Temperatur von 60 bis 180 °C vernetzt wird, insbesondere bei 60 bis 150 °C, vorzugsweise bei 90 bis 130 °C, und
3) Erhalten einer vernetzten Beschichtung auf der Oberfläche des Substrates.

Gegenstand der Erfindung ist zudem die Verwendung einer reaktiven einkomponentigen Mischung zur Herstellung von thermisch vernetzten Beschichtungen, insbesondere ohne die Gegenwart von Hydroxyl-Gruppen enthaltenden Kohlenwasserstoffverbindungen. Gleichfalls Gegenstand der Erfindung ist die Verwendung einer reaktiven einkomponentigen Mischung zur Herstellung von thermisch vernetzten Beschichtungen.

In einer bevorzugten Ausführungsform erfolgt die Verwendung der reaktiven Einkomponenten-Mischung, in dem diese bei einer Temperatur von 60 bis 180 °C, insbesondere bei 90 bis 150 °C gehärtet wird, insbesondere in Gegenwart von 0 bis 0,6 Mol, vorzugsweise 0,001 bis 0,5 Mol, bevorzugt 0,05 bis 0,4 Mol, an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung.

Uretdion-Gruppen enthaltende Polyisocyanate sind wohlbekannt und werden beispielsweise in US 4 476 054, US 4 912 210, US 4 929 724 sowie EP 0 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäuretriamiden oder Imidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Erfindungsgemäß werden Isophorondiisocyanat (IPDI), 4,4'-Methylene dicyclohexyl diisocyanate (H12MDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxylylendiisocyanat (TMXDI) bevorzugt verwendet.

In der Regel werden Uretdion-Gruppen tragende Polyisocyanate in Polyadditionsverbindung durch Umsetzung mit Hydroxyl-Gruppen haltigen Kettenverlängerern benutzt.

Die Umsetzung dieser Uretdion-Gruppen tragenden Polyisocyanate zu Uretdion-Gruppen aufweisenden Polyadditionsverbindungen beinhaltet die Reaktion der freien NCO-Gruppen mit hydroxylgruppenhaltigen Monomeren oder Polymeren, z. B. Polyester, Polythioether, Polyether, Polycaprolactame, Polyepoxide, Polyesteramide, Polyurethane oder niedermolekulare Di-, Tri- und/oder Tetraalkohole als Kettenverlängerer und gegebenenfalls Monoaminen und/oder Monoalkoholen als Kettenabbrecher und wurde schon häufig beschrieben, beispielsweise in den Patenten EP 0 669 353, EP 0 669354, DE 30 30 572, EP 0 639 598 oder EP 0 803 524. Bevorzugte Uretdion-Gruppen aufweisende Polyadditionsverbindungen haben einen freien NCO-Gehalt von weniger als 2 Gew.-% und einen Gehalt an Uretdion-Gruppen von 3 bis 17 Gew.-%.

Außer den Uretdion-Gruppen können die Polyadditionsverbindungen auch Isocyanurat-, Biuret-, Allophanat-, Urethan- und/oder Harnstoff-Strukturen aufweisen.

Unter Formulierungshilfstoffen ohne gegenüber Isocyanat-Gruppen reaktive Gruppen werden Formulierungshilfstoffe verstanden, die keine funktionellen Gruppen aufweisen, die mit einer Isocyanat-Gruppe, ob latent oder frei, bei Normaltemperatur oder erhöhter Temperatur bis 180 °C reagieren.

Erfindungsgemäße Mischungen können in geeigneten Mischaggregaten erzeugt werden, z.B. Statikmischer, Extruder, Rührkessel, mit oder ohne Lösemittel.

Aushärtung der reaktiven Mischung: Die erfindungsgemäßen reaktiven Mischungen können bei Temperaturen von 80 - 220 °C ausgehärtet werden, innerhalb von 1 min bis 24 h.
Bevorzugt liegt die Aushärtetemperatur bei 140-160 °C und bei 5 min bis 1h.

### Beispiele

| **Einsatzstoffe** | **Produktbeschreibung, Hersteller** |
|---|---|
| Alkyl-terminierter UD-Vernetzer | 2-Ethylhexyl-terminierte UD Vernetzer |
| DBTL | Dibutylzinndilaurat, Urethanisierungskatalysator, Aldrich |
| IPDI-Uretdion | Isophorondiisocyanat Uretdion |
| DBN | 1,5-Diazabicyclo[4.3.0]non-5-ene, Aldrich |

### Herstellung ein Model System M1

900 g IPDI-Uretdion wird in einem Reaktionskolben bei 60 °C vorgelegt. Anschließend wird Methanol im 5,5 fachen molaren Überschuss je Isocyanat-Gruppe in ca. 1 Stunde zugetropft. Die Reaktion ist leicht exotherm. Nach einer Reaktionszeit von ca. 6 Stunden bei 60 °C ist der freie NCO-Gehalt 0 Gew.-%. Anschließend wird der Methanol-Überschuss unter Vakuum entfernt. NCO Zahl frei = 0 Gew.-%; NCO latent = 14,8 Gew.-%;
NCO gesamt = 14,8 Gew.-% in Bezug auf die Gesamtzusammensetzung des C1-Alkyl-terminierten UD-Vernetzers.

### Herstellung ein Model System M2

553 g IPDI-Uretdion und 447 g 2-Ethylhexanol werden in einem Reaktionskolben eingewogen, auf max. 80 °C aufgeheizt und gerührt. Nach einer Reaktionszeit von ca. 7 Stunden ist der freie NCO-Gehalt < 0,1 Gew.-%. NCO Zahl frei = 0 Gew.-%; NCO latent = 11,17 Gew.-%; NCO gesamt = 11,17 Gew.-% in Bezug auf die Gesamtzusammensetzung des 2-Ethylhexyl-terminierten UD Vernetzers.

### Herstellung einer reaktiven Mischung aus einem Model System (MS) mit und ohne Katalysatoren

Es wird je ein Model System MS1 und MS2 50%ig in DMSO der reaktiven Mischungen M1 oder M2 hergestellt. Die reaktiven Mischungen sind in DMSO gelöst. Danach wird 1% Katalysator (auf Feststoff) zugegeben und ebenfalls gelöst. Sofort wird diese Lösung im Trockenschrank bei 150 °C 30 Minuten getempert und im Eisbad zügig abgekühlt. Anschließend werden die NCO-Kenndaten ermittelt. Die Ergebnisse sind in Tabelle 1 dargestellt.

**Tabelle 1: NCO-Gehalt in Gew.-% an freiem NCO vom Model Systemen nach Temperieren bei 150°C und 30 Minuten.**

| | **VG1** | **VG2** | **Beispiel 1** |
|---|---|---|---|
| Katalysator | **ohne** | **DBTL** | **DBN** |
| MS 1 nur NCO | 1,3 | 1,3 | 6,7 |
| MS 2 NCO: OH (2:1) | 1,0 | 0,0 | 4,9 |

Diese Ergebnisse zeigen, dass die reaktive Mischung aus Uretdion-Gruppenenthaltenden Molekülen in Abwesenheit von Amidinen nicht zur Bildung von freiem Isocyanat führt. Ohne die Gegenwart von Amidinen können sowohl in Gegenwart als auch ohne Hydroxyl-Gruppen keine freien Isocyanat-Gruppen aus den Uretdionen freigesetzt werden, siehe VG1. Auch die Zugabe eines Katalysators wie Dibutylzinndilaurat kann weder in Anwesenheit von Hydroxyl-Gruppen noch in Abwesenheit dieser freien Isocyanate aus den Uretdion-Gruppen bilden wie die Versuche VG2 aufzeigen. Auf der anderen Seite ist die Herstellung von freien NCO-Gruppen aus einer reaktiven Mischung von Uretdion-Gruppen enthaltenden Molekülen und spezielle Amidine, wie DBN und DBU in Abwesenheit eines UD-Reaktionspartners möglich, wie mit dem Modellsystem M1 im Versuch B1 gezeigt wurde.

### Blechapplikation von Uretdion-Gruppen enthaltenden Vernetzern ohne und mit Amidin-Katalysatoren

Der Vernetzer 2-Ethylhexyl-terminierter Uretdion-Vernetzer wird vorab 70 Gew.-% in Aceton gelöst (Gesamtzusammensetzung 100 Gew.-%). Anschließend wird der Katalysator zugegeben (1 Gew.-%) in Bezug auf die Gesamtzusammensetzung von 100 Gew.-%. Sobald dieser gelöst ist, wird die Mischung auf ein Blech appliziert und bei 150 °C 30 Minuten im Trockenschrank getempert.

Als Referenzmessung wurde die Tg des unbehandelten Vernetzers als VG3 gemessen, die bei 78 °C liegt. Nach der Aushärtung des Systems, wurde die Tg von jeder Vergleichsprobe (VG3 bis VG5) sowie der erfindungsgemäßen reaktiven Mischung (Beispiel 2) gemessen. Die Ergebnisse sind in Tabelle 2 dargestellt.

**Tabelle 2: Tg [°C] vom Blechapplikation nach Aushärtung bei 150°C und 30 Minuten.**

| **BF 1540** | **VG3** | **VG4** | **VG5** | **Beispiel 2** |
|---|---|---|---|---|
| Aushärtung | keine | 150°C 30' | 150°C 30' | 150°C 30' |
| Katalysator | Ohne | Ohne | DBTL | DBN |
| Tg [°C] | 78 | 45 | 56 | 134 |

Anhand dieser Ergebnisse wird ersichtlich, dass Uretdion-Gruppen enthaltende Vernetzer in Abwesenheit von OH-Reaktionspartnergruppen ohne Katalysator (VG4) oder mit typischen Urethankatalysatoren, wie DBTL (VG5), keine Vernetzung zeigen, wenn sie bei niedriger Temperatur ausgehärtet werden.

Auf der anderen Seite führt die Mischung von Uretdion-Gruppen enthaltenden Vernetzern und bestimmten Amidin-Katalysatoren zu einer Aushärtung des Systems, wie anhand der Steigung des Tgs belegt wurde.

### Methode

### Bestimmung des freien NCO-Gehaltes

Ca. 3 g Produkt wird in ein geeignetes Titriergefäß eingewogen. Anschließend erfolgt die Zugabe von 20 ml Di-n-butylamin-Lösung (ca. 1M in Toluol). Nach dem Lösen und 10 Min. Reaktionszeit wird mit 100 ml Isopropanol verdünnt. Anschließend werden 2 - 3 Tropfen Bromphenolblau-Lösung zugegeben und mit 1 M Salzsäure unter Rühren von blau bis zum Umschlag nach gelb titriert.

### Bestimmung des latenten NCO-Gehaltes

Ca. 3 g Produkt wird in ein geeignetes Titriergefäß eingewogen. Anschließend erfolgt die Zugabe von 20 ml Butylamin-Lösung (ca. 1M in Toluol) und 1 Tropfen DBTL. Nach dem Lösen und mind. 3 Stunden Reaktionszeit wird mit 100 ml Isopropanol verdünnt. Anschließend werden 2 - 3 Tropfen Bromphenolblau-Lösung zugegeben und mit 1 M Salzsäure unter Rühren von blau bis zum Umschlag nach gelb titriert.

### Bestimmung der Tg

Die Bestimmung der thermischen Eigenschaften der im Rahmen der vorliegenden Erfindung eingesetzten Uretdion Vernetzer, erfolgt durch Dynamische Differenzkalorimetrie (DSC) nach der DSC-Methode DIN 53765 mit einem Mettler Toledo DSC1 Gerät.

## Patentansprüche

1. Reaktive einkomponentige, thermisch vernetzbare Mischung umfassend mindestens eine Uretdion-Gruppe aufweisende Verbindung, **dadurch gekennzeichnet, dass** die Mischung umfasst:
i) mindestens eine Verbindung, die mindestens eine Uretdion-Gruppe aufweist oder Mischungen dieser, und
ii) mindestens eine Verbindung mit mindestens einer mit der Verbindung über Kohlenstoffatome verknüpften N-C=N-Gruppe,
iii) optional mindestens einen Formulierungshilfstoff ohne gegenüber Isocyanat-Gruppen reaktive Gruppen, und
iv) optional mindestens ein aprotisches Lösemittel oder eine Mischung aprotischer Lösemittel, und
v) 0 bis 0,6 Mol an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung.

2. Reaktive Mischung nach Anspruch 1, **dadurch gekennzeichnet, dass** die ii) mindestens eine Verbindung mit mindestens einer C=N-Gruppe ausgewählt ist aus 1-Metyhylimidazol, N,N-Dimethyl-N'-phenylformamidinin, 1,4,5,6-Tetrahydro-1,2-dimethylpyrimidin, 2-Methyltetrahydropyrimidin, 1-Aceto-2-phenylimidazolin und 1-Aceto-2,4-dimethylimidazolin, 1,1,3,3-Tetramethylguanidin, Dicyandiamid, 1,5,7-Triazabicyclo[4.4.0]dec-5-en, 7-Methyl-1,5,7-triazabicyclo[4.4.0]dec-5-ene, N,N,N'-trisubstituierte Amidine und N,N,N'-trisubstituierten Diazabicycloalken-Verbindungen.

3. Reaktive Mischung nach Anspruch 1 oder 2, **dadurch gekennzeichnet, dass** ii) die C=N-Gruppe der Verbindung Teil einer N,N,N'-trisubstituierten Diazabicycloalken-Verbindung ist.

4. Reaktive Mischung nach einem der Ansprüche 1 bis 3, **dadurch gekennzeichnet, dass** ii) die Verbindung ausgewählt ist aus 1,5-Diazabicyclo[4.3.0]-non-5-en (DBN) und 1,8-Diazabicyclo[5.4.0]undec-7-en (DBU).

5. Reaktive Mischung nach einem der Ansprüche 1 bis 4, **dadurch gekennzeichnet, dass** sie besteht aus:
i) mindestens einer Verbindung, die mindestens eine Uretdion-Gruppe aufweist oder Mischungen dieser, und
ii) mindestens einer Verbindung mit mindestens einer mit der Verbindung über Kohlenstoffatome verknüpften N-C=N-Gruppe,
iii) optional mindestens einem Formulierungshilfstoff ohne gegenüber Isocyanat-Gruppen reaktive Gruppen, und
iv) optional mindestens einem aprotischem Lösemittel oder einer Mischung aprotischer Lösemittel.

6. Reaktive Mischung nach einem der Ansprüche 1 bis 5, **dadurch gekennzeichnet, dass** die Mischung ausgewählt ist aus den Komponenten i) und ii) und optional zusätzlich ausgewählt ist aus iii), iv) und v), mit
i) 40 bis 99,999 Gew.-% mindestens einer Verbindung oder Mischungen dieser, die mindestens auf einer terminal substituierten Isocyanat-Gruppe basiert und mindestens eine Uretdion-Gruppe aufweist und auf einer Polyadditionsverbindung von mindestens einem aliphatischen und/oder mindestens einem cycloaliphatischen Diisocyanat basiert, und/oder mindestens einer Verbindung, die mindestens eine freie Isocyanat-Gruppe aufweist, die jeweils unabhängig auf aliphatischen oder cycloaliphatischen Diisocyanaten oder auf Polyadditionsverbindungen von aliphatischen oder cycloaliphatischen Diisocyanaten basiert, und
ii) 0,001 bis 5 Gew.-% mindestens einer Verbindung mit mindestens einer mit der Verbindung über Kohlenstoffatome verknüpften N-C=N-Gruppe,
iii) 0 bis 10 Gew.-% mindestens eines Formulierungshilfstoffes ohne gegenüber Isocyanat-Gruppen reaktive Gruppen, und
iv) 0 bis 59,999 Gew.-% mindestens eines aprotischen Lösemittels oder einer Mischung aprotischer Lösemittel,
v) 0 bis 0,6 Mol an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung, wobei der Gehalt der Komponenten i) und ii) und optional zusätzlich iii), iv) und v) in der Gesamtzusammensetzung der reaktiven Mischung 100 Gew.-% ergibt.

7. Reaktive Mischung nach einem der Ansprüche 1 bis 6, **dadurch gekennzeichnet, dass** die Mischung ausgewählt ist aus den Komponenten i), ii) und iv) und optional zusätzlich ausgewählt ist aus iii), mit
i) 40 bis 99,999 Gew.-% mindestens einer Verbindung oder Mischungen dieser, die auf mindestens einer terminal substituierten Isocyanat-Gruppe basiert und mindestens eine Uretdion-Gruppe aufweist und auf einer Polyadditionsverbindung von mindestens einem aliphatischen und/oder mindestens einem cycloaliphatischen Diisocyanat basiert, und/oder mindestens einer Verbindung, die mindestens eine freie Isocyanat-Gruppe aufweist, die jeweils unabhängig auf aliphatischen oder cycloaliphatischen Diisocyanaten oder auf Polyadditionsverbindungen von aliphatischen oder cycloaliphatischen Diisocyanaten basiert, und
ii) 0,001 bis 5 Gew.-% mindestens einer Verbindung mit mindestens einer mit der Verbindung über Kohlenstoffatome verknüpften N-C=N-Gruppe,
iii) 0 bis 10 Gew.-% mindestens eines Formulierungshilfstoffes ohne gegenüber Isocyanat-Gruppen reaktive Gruppen, und
iv) 0 bis 59,999 Gew.-% mindestens eines aprotischen Lösemittels oder eine Mischung aprotischer Lösemittel,
wobei der Gehalt der Komponenten i), ii) und iv) und optional iii) in der Gesamtzusammensetzung der reaktiven Mischung 100 Gew.-% ergibt.

8. Reaktive Mischung nach einem der Ansprüche 1 bis 7, **dadurch gekennzeichnet, dass** i) die mindestens eine Verbindung, die mindestens eine Uretdion-Gruppe aufweist ausgewählt ist aus
a) Uretdion-Gruppen enthaltenden Polyisocyanaten, insbesondere basieren die Uredtion-Gruppen enthaltenden Polyisocyanate auf Isophorondiisocyanat (IPDI), 4,4'-Methylene dicyclohexyl diisocyanate (H12MDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxylylendiisocyanat (TMXDI) oder Mischungen basierend auf mindestens zwei der genannten Verbindungen oder
b) mit mindestens einer terminal substituierten Isocyanat-Gruppe, aus der Reaktion der Isocyanat-Gruppe mit eine Hydroxyl-Gruppe, NH-Gruppe oder HS-Gruppe aufweisenden monomeren oder polymeren Verbindung, und Uretdion-Gruppen enthaltenden Polyisocyanaten, insbesondere basieren die Uretdion-Gruppen enthaltenden Polyisocyanate auf Isophorondiisocyanat (IPDI), 4,4'-Methylenedicyclohexyldiisocyanate (H12MDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxylylendiisocyanat (TMXDI) oder Mischungen basierend auf mindestens zwei der genannten Verbindungen, wobei insbesondere die mindestens eine monomere oder polymere Verbindung mit mindestens einer Hydroxyl-Gruppe, NH-Gruppe oder HS-Gruppe umfasst Polyester, Polythioether, Polyether, Polycaprolactame, Polyepoxide, Polyesteramide, Polyurethane oder niedermolekulare Di-, Tri- und/oder Tetraalkohole und gegebenenfalls Monoamine und/oder Monoalkohole, oder
c) mit mindestens einer terminal Alkyl-substituierten Isocyanat-Gruppe, aus der Reaktion einer Isocyanat-Gruppe mit einem Alkohol, und Uretdion-Gruppen enthaltenden Polyisocyanaten, wobei die Alkyl-Gruppe 1 bis 12 C-Atome umfasst, vorzugsweise 2 bis 10 C-Atome, insbesondere basieren die Uretdion-Gruppen enthaltenden Polyisocyanate auf Isophorondiisocyanat (IPDI), 4,4'-Methylene dicyclohexyl diisocyanate (H12MDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Methylendiphenyldiisocyanat (MDI) und Tetramethylxylylendiisocyanat (TMXDI) oder Mischungen basierend auf mindestens zwei der genannten Verbindungen.

9. Verfahren zur Herstellung einer thermisch vernetzten Mischung, insbesondere einer thermisch vernetzten Beschichtung,
indem
1) eine reaktive einkomponentige Mischung nach einem der Ansprüche 1 bis 8, umfassend
i) mindestens eine Verbindung, die mindestens eine Uretdion-Gruppe aufweist oder Mischungen dieser, und
ii) mindestens eine Verbindung mit mindestens einer mit der Verbindung über Kohlenstoffatome verknüpften N-C=N-Gruppe,
iii) 0 bis 0,6 Mol an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung,
iv) optional mindestens einen Formulierungshilfstoff ohne gegenüber Isocyanat-Gruppen reaktive Gruppen, und
v) optional mindestens ein aprotisches Lösemittel oder eine Mischung aprotischer Lösemittel,
2) bei einer Temperatur von 60 bis 180 °C vernetzt wird, und
3) eine thermisch vernetzte Mischung erhalten wird.

10. Verfahren nach Anspruch 9, **dadurch gekennzeichnet, dass** die ii) mindestens eine Verbindung ausgewählt ist aus 1,5-Diazabicyclo[4.3.0]- non-5-en (DBN) und 1,8-Diazabicyclo[5.4.0]undec-7-en (DBU).

11. Verfahren nach Anspruch 9 oder 10, **dadurch gekennzeichnet, dass** eine thermisch vernetzte Beschichtung hergestellt wird,
indem
1) eine reaktive Mischung nach einem der Ansprüche 1 bis 8, auf die Oberfläche eines Substrates aufgebracht wird, und
2) die reaktive Mischung auf der Oberfläche des Substrates bei einer Temperatur von 60 bis 180 °C vernetzt wird, und
3) Erhalten einer vernetzten Beschichtung auf der Oberfläche des Substrates.

12. Thermisch vernetze Beschichtung erhältlich nach einem Verfahren nach einem der Ansprüche 9 bis 11.

13. Verwendung einer reaktiven einkomponentigen Mischung nach einem der Ansprüche 1 bis 8 zur Herstellung von thermisch vernetzten Beschichtungen.

14. Verwendung einer reaktiven einkomponentigen Mischung nach einem der Ansprüche 1 bis 8 zur Herstellung von thermisch vernetzten Beschichtungen.

15. Verwendung nach Anspruch 14, **dadurch gekennzeichnet, dass** die reaktive Einkomponenten-Mischung bei einer Temperatur von 60 bis 180 °C gehärtet wird, insbesondere in Gegenwart von 0 bis 0,6 Mol an Hydroxyl-Gruppen in Hydroxyl-Gruppen enthaltenden Kohlenwasserstoffverbindungen auf 1 Mol Isocyanat-Gruppen umfassend freie Isocyanat-Gruppen und latente Isocyanat-Gruppen in Uretdion-Gruppen in der gesamten reaktiven Mischung.
